# EUROPEAN PATENT SPECIFICATION

(11) **EP 4 588 354 B1**
(45) Date of publication and mention of the grant of the patent: **28.10.2026**
(21) Application number: 25181582.5
(22) Date of filing: 08.02.2017
(51) Int. Cl.: A23G 4/20

(54) **ADVANCED ENCAPSULATION PROCESS FOR CONTROLLED RELEASE OF ACTIVE INGREDIENTS FROM A CHEWING GUM**
VERBESSERTES VERKAPSELUNGSVERFAHREN ZUR KONTROLLIERTEN FREISETZUNG VON WIRKSTOFFEN AUS EINEM KAUGUMMI
PROCÉDÉ D'ENCAPSULATION AVANCÉ POUR LA LIBÉRATION CONTRÔLÉE DE PRINCIPES ACTIFS À PARTIR D'UN CHEWING-GUM

(43) Date of publication of application: 23.07.2025
(62) Document number(s) of the earlier application(s) in accordance with Art. 76 EPC: 17705767.6 / 3 579 702
(73) Proprietor: Intercontinental Great Brands LLC, East Hanover, NJ 07936 (US)
(72) Inventor: BOGHANI, Navroz, East Hanover, 07936 (US); JANI, Bharat, East Hanover, 07936 (US); HIERRO, Anny, East Hanover, 07936 (US); SCAROLA, Leonard, East Hanover, 07936 (US); MAKERT, Christian, 63762 Grossostheim (DE)
(74) Representative: Boult Wade Tennant LLP

(56) References cited:
- EP-A1- 1 474 993
- WO-A2-2012/145611
- WO-A2-2016/123430
- US-A1- 2005 112 236
- US-A1- 2006 263 413
- US-A1- 2015 223 489

## Description

### FIELD

The disclosure relates to a chewing gum product.

### BACKGROUND

US 2006/263413 A1 discloses a delivery system for use in edible compositions, which comprises at least one active component with at least one encapsulating material. The delivery system is formulated to provide consistent controlled release of the active component over a preselected period of time, such as an extended period of time. Conventional methods for preparing one or more active ingredients for use in a comestible include forming an extrudate having one or more active ingredients encapsulated therein. The extrudate is then convectively cooled to a temperature such that the extrudate may be broken into plurality of pieces before being ground into a powder. When the extrudate is broken, the pieces formed are non-uniform in shape and size. As a result, various amounts of energy are required to grind each piece into particles of a desired size, thereby making the milling operation inefficient.

Accordingly, a system and method capable of continuously and efficiently preparing an active ingredient for use in a comestible is desirable.

### SUMMARY

The present invention is defined by the appended claims.

The present invention discloses a final chewing gum product comprising a plurality of component pieces therein, each component piece comprising: a component body of an encapsulating material; and a plurality of regions of at least one active ingredient encapsulated within said encapsulating material, wherein less than 15% of an average active concentration in each component piece is in contact with an exterior surface of said component body.

According to one embodiment of the invention, a chewing gum component for use in a chewing gum composition is provided including a component body and a plurality of regions of at least one active ingredient encapsulated within an encapsulating material. The plurality of regions is disposed within said component body. Less than 15% of an average active concentration in said component body is in contact with an exterior surface of said component body.

In addition to one or more of the features described above, or as an alternative, in further embodiments wherein less than 10% of said average active concentration in said component body is in contact with an exterior surface of said component body.

In addition to one or more of the features described above, or as an alternative, in further embodiments said body has a longest dimension less than 1000 microns.

In addition to one or more of the features described above, or as an alternative, in further embodiments a cross-section of said body is generally circular in shape.

In addition to one or more of the features described above, or as an alternative, in further embodiments encapsulating material is insoluble in water.

According to another embodiment, a chewing gum component for use in a chewing gum composition is provided including a plurality of component bodies. Each of the plurality of bodies includes a plurality of regions of at least one active ingredient encapsulated within an encapsulating material. The plurality of regions is disposed within said component body. The plurality of component pieces has a size distribution with a standard deviation of less than 50% of an average longest dimension of each of said plurality of pieces.

In addition to one or more of the features described above, or as an alternative, in further embodiments said plurality of component bodies has a narrow size distribution with a standard deviation of less than 10% of the average longest dimension of each of said plurality of component bodies.

In addition to one or more of the features described above, or as an alternative, in further embodiments each of said plurality of component bodies has a longest dimension less than 1000 microns.

According to another embodiment, a chewing gum component for use in a chewing gum composition is provided including a component body and a plurality of regions of at least one active ingredient encapsulated within an encapsulating material. The plurality of regions is disposed within said component body. A release profile of said at least one active ingredient is less than about 10% per minute within one minute after exposure of said component body to a dissolving liquid.

In addition to one or more of the features described above, or as an alternative, in further embodiments said profile of said at least one active ingredient is less than about 3% per minute within one minute after exposure of said component body to a dissolving liquid.

In addition to one or more of the features described above, or as an alternative, in further embodiments said profile of said at least one active ingredient is continuously linear for at least 30 minutes after exposure of said component body to a dissolving liquid.

According to another embodiment, a chewing gum component for use in a chewing gum composition is provided including a component body and a plurality of regions of at least one active ingredient encapsulated within an encapsulating material. An amount of the at least one active ingredient is configured to dissolve within three minutes of exposure to water is less than 10%. The amount is determined by placing the component body in a container of water at a temperature between 21-23°C. The container has a rotatable element operable at a rotational speed of 350 rpm.

In addition to one or more of the features described above, or as an alternative, in further embodiments wherein less than 5% of the at least one active ingredient is configured to dissolve within 3 minutes of exposure to water.

According to another embodiment, a method for manufacturing a comestible includes forming an extrudate of a first component. The first component includes a plurality of regions of at least one active ingredient encapsulated within an encapsulating material. The extrudate is cut at intervals into a plurality of pieces. An amount of the at least one active ingredient in each of the plurality of pieces is configured to dissolve within 3 minutes of exposure to water. The amount is less than 10%. Determining the amount of the at least one active ingredient in each of the plurality of pieces is configured to dissolve within 3 minutes of exposure to water includes adding said extrudate to a container of water having a temperature between 21-23°C and rotating a rotatable element positioned within the container at a rotational speed of 350 rpm.

According to another embodiment, a method for manufacturing a comestible is provided including forming an extrudate of a first component. The extrudate is cut at intervals into a plurality of pieces. A longest dimension of each of said plurality of pieces is less than 1000 microns. A gum is formed including said plurality of pieces as an ingredient.

In addition to one or more of the features described above, or as an alternative, in further embodiments said extrudate is cut into said plurality of pieces at regular intervals.

In addition to one or more of the features described above, or as an alternative, in further embodiments extrudate is cut into said plurality of pieces at irregular intervals.

In addition to one or more of the features described above, or as an alternative, in further embodiments each of said plurality of pieces is substantially uniform in size.

In addition to one or more of the features described above, or as an alternative, in further embodiments said longest dimension is between about 200 microns and about 700 microns.

In addition to one or more of the features described above, or as an alternative, in further embodiments said first component is a composition including regions of one or more active ingredients encapsulated within an encapsulating material.

In addition to one or more of the features described above, or as an alternative, in further embodiments said active ingredient includes at least one sweetener.

In addition to one or more of the features described above, or as an alternative, in further embodiments said encapsulating material is a polyvinyl acetate.

In addition to one or more of the features described above, or as an alternative, in further embodiments cutting said extrudate using a cutting device configured to rotate about an axis arranged substantially parallel to a direction of travel of said extrudate.

In addition to one or more of the features described above, or as an alternative, in further embodiments cutting said extrudate includes supplying said extrudate to a pelletizer having a wheel including a plurality of blades. The wheel is configured to rotate about an axis arranged substantially perpendicular to a direction of travel of said extrudate.

In addition to one or more of the features described above, or as an alternative, in further embodiments less than 1% of said particles of active ingredient are ruptured by said plurality of blades during said cutting.

In addition to one or more of the features described above, or as an alternative, in further embodiments none of said particles of active ingredient are ruptured by said plurality of blades during said cutting.

In addition to one or more of the features described above, or as an alternative, in further embodiments the comestible is a chewing gum.

According to another embodiment, a method for manufacturing a composition is provided including forming an extrudate of a first component and cutting said extrudate of said first component at intervals into a plurality of first pieces. The plurality of first pieces has a first release profile. An extrudate of a second component is formed and cut at intervals into a plurality of second pieces. The plurality of second pieces has a second release profile.

In addition to one or more of the features described above, or as an alternative, in further embodiments said first release profile and said second release profile are different.

In addition to one or more of the features described above, or as an alternative, in further embodiments said first component includes a first active ingredient and said second component includes a second active ingredient. The first active ingredient and second active ingredient are substantially identical.

In addition to one or more of the features described above, or as an alternative, in further embodiments said first component includes a first active ingredient and said second component includes a second active ingredient. The first active ingredient and second active ingredient are different.

In addition to one or more of the features described above, or as an alternative, in further embodiments said composition is a chewing gum.

In addition to one or more of the features described above, or as an alternative, in further embodiments said composition is a pharmaceutical.

According to another embodiment, a method for customizing a dissolution rate of a comestible is provided including providing a plurality of pieces of first component. The plurality of pieces of first component includes at least a first encapsulated active ingredient having a first release profile. A plurality of pieces of second component is provided. The plurality of pieces of second component includes at least a second encapsulated active ingredient having a second release profile. The second release profile is different than said first release profile. The plurality of pieces of first component and the plurality of pieces of second component are mixed.

In addition to one or more of the features described above, or as an alternative, in further embodiments said plurality of pieces of first component and said plurality of pieces of second component are substantially similar in size.

In addition to one or more of the features described above, or as an alternative, in further embodiments said plurality of pieces of first component and said plurality of pieces of second component are different in size.

In addition to one or more of the features described above, or as an alternative, in further embodiments said first encapsulated active ingredient and said second encapsulated active ingredient are the same.

In addition to one or more of the features described above, or as an alternative, in further embodiments said first encapsulated active ingredient and said second encapsulated active ingredient are different.

In addition to one or more of the features described above, or as an alternative, in further embodiments wherein said composition is a chewing gum.

In addition to one or more of the features described above, or as an alternative, in further embodiments wherein said composition is a pharmaceutical.

In addition to one or more of the features described above, or as an alternative, in further embodiments wherein an encapsulating material of the plurality of pieces of first component and an encapsulating material of the plurality of pieces of second component have a different molecular weight.

According to another embodiment, a method of manufacturing a comestible includes providing an active ingredient to an extruder and providing an encapsulating ingredient to the extruder. The active ingredient and the encapsulating ingredient are mixed within the extruder to form a composition. The composition is passed through a melt screen filter having openings less than 500 microns and is extruded from the extruder.

In addition to one or more of the features described above, or as an alternative, in further embodiments extruding the composition from the extruder includes extruding the composition through an extruder die having exit holes between 200 and 1000 microns.

In addition to one or more of the features described above, or as an alternative, in further embodiments extruding the composition from the extruder includes extruding the composition through an extruder die having exit holes between 200 and 800 microns.

According to another embodiment, a system for forming an encapsulated active ingredient includes a continuous extruder configured to receive and mix an active ingredient and an encapsulating ingredient to form an encapsulating composition. An extruder die is arranged at a downstream extend of the extruder and a melt screen filter having openings less than 500 microns is arranged upstream from the extruder die.

According to another embodiment, a method of forming a composition includes forming an extrudate of the composition, the composition including water soluble ingredients, and cooling the extrudate with water.

In addition to one or more of the features described above, or as an alternative, in further embodiments the extrudate includes a water soluble active ingredient encapsulated within a matrix that is not water soluble.

### BRIEF DESCRIPTION OF THE FIGURES

The accompanying drawings incorporated in and forming a part of the specification embodies several aspects of the present disclosure and, together with the description, serves to explain the principles of the present disclosure. In the drawings:
FIG. 1 is a perspective view of a piece of first component for use in a comestible according to an embodiment;
FIG. 2 is a schematic diagram of an extruder for forming an extrudate of first component according to an embodiment;
FIG. 3A is a schematic diagram of a system for forming the pieces of first component of FIG. 1 according to an embodiment;
FIG. 3B is a schematic diagram of a system for forming the pieces of first component of FIG. 1 according to an embodiment
FIG. 4 is a schematic view of portion of a gum manufacturing system according to an embodiment;
FIG. 5 is a cross-sectional view of a final gum product including a plurality of pieces of a first component according to an embodiment;
FIG. 6 is a graph of a dissolution curve of encapsulated aspartame according to an embodiment; and
FIG. 7 is another graph of a dissolution curve of encapsulated aspartame according to an embodiment.

The detailed description explains embodiments of the invention, together with advantages and features, by way of example with reference to the drawings.

### DETAILED DESCRIPTION

The following disclosure will detail particular embodiments according to the present invention, which provides pieces of an ingredient, including an encapsulate compositions, particularly for use in chewing gum and other such confections.

The comestible discussed herein include any type of edible product, such as but not limited to chewing gum (at any stage including elastomer, partially finished base, finished chewing gum base, and finished chewing gum), confection (which may be synonymous with chewing gum and candy), sweet and savory biscuits and cakes, nuts, and grains. For ease of description, the comestible will be referred as chewing gum for the remainder of the description. Certain compositions of chewing gum may have a non-uniform texture and/or a multi-layered composition.

As used herein, a product referred to as "chewing gum" or "gum" includes, but is not limited to, compositions ranging from and inclusive of compounded elastomer to finished gum, which may include compounded elastomer in addition to some compounding aids, master batch gum base, compounded elastomer in addition to some subsequent gum ingredients, compounded elastomer in addition to some gum base ingredients and some subsequent gum ingredients, gum base, gum base in addition to some subsequent gum ingredients, master batch finished gum, and finished gum.

Before explaining the various systems and methods it is helpful to discuss the general composition of several typical stages of chewing gum manufacture in which encapsulate may be used, namely finished gum.

A "finished chewing gum" or "finished gum," as used herein, will refer to chewing gum that is generally ready for preparation to distribute the product to the consumer. As such, a finished gum may still require temperature conditioning, forming, shaping, packaging and coating. However, from a compositional standpoint, the chewing gum itself is generally finished. Not all finished gums have the same ingredients or the same amounts of individual ingredients. By varying the ingredients and amounts of ingredients, textures, flavor and sensations, among other things, can be varied to provide differing characteristics to meet the needs of users.

As is generally well known, a finished gum typically includes a water soluble bulk portion, a water insoluble gum base portion, and one or more flavoring agents. The water soluble portion dissipates over a period of time during chewing. The gum base portion is retained in the mouth throughout the chewing process. A finished gum is to be defined as a chewing gum that is ready for user consumption.

A "finished chewing gum base" or "finished gum base", as used herein, will refer to chewing gum that includes a sufficient combination of gum base ingredients that need only be combined with subsequent gum ingredients to form a finished gum. A finished gum base is a visco-elastic material that includes at least a viscous component, an elastic component, and a softener component. For example, a typical gum base may include elastomer, at least some of the filler, resin and/or plasticizer, polyvinyl acetate, and a softener (such as an oil, fat or wax). Merely compounded elastomer without the addition of any softener, for example, would not be a finished gum base because it would not be considered useable in a finished gum structure because of its difficulty, if not impossibility, to chew. In one embodiment, the viscosity of the finished gum base or the extrudate output from the extruder described further below is between about 75 pascal-seconds and about 140,000 pascal-seconds.

A "partial chewing gum base" or "partial gum base," as used herein, will refer to chewing gum that includes a gum base ingredient or combination of gum base ingredients that need be combined with further gum base ingredients and subsequent, non-base gum ingredients to form a finished gum. A partial gum base includes at least an elastic component, and will require addition of at least a viscous and/or softener component to form a finished gum base.

The insoluble gum base in its finished gum base form generally includes ingredients falling under the following categories: elastomers, elastomer plasticizers (resins or solvents), plasticizers, fats, oils, waxes, softeners and fillers. Further discussion of representative ingredients within each category will be provided later on. The gum base may constitute between 5-95% by weight of a finished gum, more typically 10-50% by weight of the finished gum, and most commonly 20-30% by weight of the finished gum.

The water soluble portion of finished gum will be referred to as subsequent ingredients in this disclosure (as they are added subsequent to manufacture of a) finished gum base, and may include subsequent gum ingredients falling under the following categories: softeners, bulk sweeteners, high intensity sweeteners, flavoring agents, acids, additional fillers, functional ingredients and combinations thereof. Softeners are added to the gum in order to optimize the chewability and mouth feel of the gum. The softeners, which are also known as plasticizers, plasticizing agents or emulsifiers, generally constitute between about 0.5-15% by weight of the finished gum. Bulk sweeteners constitute between 5-95% by weight of the finished gum, more typically 20-80% by weight of the finished gum and most commonly 30-60% by weight of the finished gum. High intensity sweeteners may also be present and are commonly used with sugarless sweeteners. When used, high intensity sweeteners typically constitute between 0.001-5% by weight of the finished gum, preferably between 0.01-3% by weight of the finished gum. Typically, high intensity sweeteners are at least 20 times sweeter than sucrose.

Flavor should generally be present in the gum in an amount within the range of about 0.1-15% by weight of the finished gum, preferably between about 0.2-5% by weight of the finished gum, most preferably between about 0.5-3% by weight of the finished gum. Natural and artificial flavoring agents may be used and combined in any sensorially acceptable fashion. When included, acids typically constitute between about 0.001-5% by weight of the finished gum. Optional ingredients such as colors, functional ingredients and additional flavoring agents may also be included in gum.

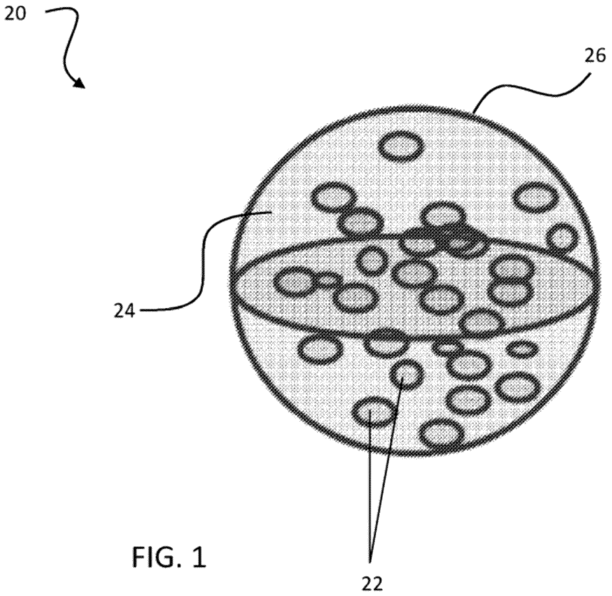

Referring now to the FIGS., during the formation of a gum or other comestible, a plurality of pieces 20 of a first component may be mixed with one or more other ingredients, such as in a gum manufacturing system for example, to form a finished gum product. FIG. 1 illustrates an example of one of the plurality of pieces 20 of a first component in more detail. The plurality of pieces 20 generally have a diameter less than 1000 microns, such as between 200 and 700 microns for example. In one embodiment, each of the plurality of pieces 20 is substantially identical in size. As a result, the pieces 20 typically used in a batch of gum, such as 4.5 kg (ten pounds) of pieces 20 for example, have a narrow size distribution with a standard deviation of less than 50%, and more specifically less than 10%, of the average longest dimension thereof. The illustrated piece 20 of a first component has a generally circular cross-section and may be spherical or cylindrical in shape; however pieces 20 having other shapes are also contemplated herein. For example, the pieces 20 may have any shape such that the ratio of a largest dimension to a smallest dimension is less than 3:1, or alternatively, less than 2:1.

In the illustrated, non-limiting embodiment, the pieces 20 of first component include a composition containing both an "active ingredient" and an "encapsulating ingredient, the active ingredient being surrounded or encapsulated by the encapsulating ingredient. In some embodiments, the active ingredient may be relatively sensitive to high energy mixing environments (such as heat and shearing forces that can be associated with some types of mixing). Any active ingredients typically used in a comestible, such as but not limited to high intensity sweeteners (including natural sweeteners and synthetic sweeteners), food acids, and miscellaneous ingredients (including texture modifiers, coloring agents, salts, oral care ingredients, and other ingredients), are within the scope of the present disclosure. Any encapsulating ingredients typically used in a comestible, such as but not limited to polymer or resin, are also contemplated in the formation of the pieces 20 of first component. In some embodiments, the encapsulating ingredients are insoluble in water. In other embodiments, the encapsulating ingredients may be soluble in water.

For example, active ingredients may include, but are not limited to sweeteners and food acids. Sweeteners used may be selected from a wide range of materials including water-soluble sweeteners, water-soluble artificial sweeteners, water-soluble sweeteners derived from naturally occurring water-soluble sweeteners, dipeptide based sweeteners, and protein based sweeteners, including mixtures thereof. Without being limited to particular sweeteners, representative categories and examples include: (a) water-soluble sweetening agents such as dihydrochalcones, monellin, steviosides, glycyrrhizin, saccharin salts, i.e., sodium or calcium saccharin salts, cyclamate salts, acesulfame salts, such as the sodium, ammonium or calcium salt of 3,4-dihydro-6-methyl-1,2,3-oxathiazine-4-one-2,2-dioxide, the potassium salt of 3,4-dihydro-6-methyl-1,2,3-oxathiazine-4-one-2,2-dioxide (Acesulfame-K), the free acid form of saccharin and monatin; (b) dipeptide based sweeteners, such as L-aspartic acid derived sweeteners, such as L-aspartyl-L-phenylalanine methyl ester (Aspartame) and L-alphaaspartyl-N-(2,2,4,4-tetramethyl-3-thietanyl)-D-alaninamide hydrate (Alitame), methyl esters of L-aspartyl-L-phenylglycerine and L-aspartyl-L-2,5-dihydrophenyl-glycine, L-aspartyl-2,5-dihydro-L-phenylalanine; L-aspartyl-L-(1-cyclohexen)-alanine, neotame and advantame; (c) water-soluble sweeteners derived from naturally occurring water-soluble sweeteners, such as Reb-A, chlorinated derivatives of ordinary sugar (sucrose), e.g., chlorodeoxysugar derivatives such as derivatives of chlorodeoxysucrose or chlorodeoxygalactosucrose, known, for example, under the product designation of Sucralose; examples of chlorodeoxy.sucrose and chlorodeoxygalactosucrose derivatives include but are not limited to: 1-chloro-1'-deoxysucrose; 4-chloro-4-deoxy-alpha-D-galactopyranosyl-alpha-D-fructofuranoside, or 4-chloro-4-deoxygalactosucrose; 4-chloro-4-deoxy-alpha-D-galactopyranosyl-1-chloro-1-deoxy-beta-D-fructo-furanoside, or 4,1'-dichloro-4,1'-dideoxygalactosucrose; 1',6'-dichloro 1',6'-dideoxysucrose; 4-chloro-4-deoxy-alpha-D-galactopyranosyl-1,6-dichloro-1,6-dideoxy-beta-D- fructofuranoside, or 4,1',6'-trichloro-4,1',6'-trideoxygalactosucrose; 4,6-dichloro-4,6-dideoxy-alpha-D-galactopyranosyl-6-chloro-6-deoxy-beta-D-fructofuranoside, or 4,6,6'-trichloro-4,6,6'-trideoxygalactosucrose; 6,1',6'-trichloro-6,1',6'-trideoxysucrose; 4,6-dichloro-4,6-dideoxy-alpha-D-galacto-pyranosyl-1,6-dichloro-1,6-dideox y-beta-D-fructofuranoside, or 4,6,1',6'-tetrachloro 4,6,1',6'-tetradeoxygalacto-sucrose; and 4,6,1',6'-tetradeoxy-sucrose, and mixtures thereof; or (d) Other protein based sweeteners such as thaumaoccous danielli (Thaumatin I and II) and talin. Food acids may include citric acid, malic acid, fumaric acid, tartaric acid, lactic acid and adipic acid.

Encapsulation of an active ingredient will result in the protection of the active ingredient from dissolution as a result of contact with water or saliva, thereby extending the relative life of the active ingredient within a finished gum product. In addition, encapsulation of an active ingredient may also result in the protection of the active ingredient during the remainder of the production process. Since components of the comestible to be encapsulated may be sensitive to temperature, mixing, extruding, or other factors, the encapsulation allows for efficient handling and protection of these sensitive components during production. Protection of the active ingredient as referenced above is achieved via a mixing of the active ingredient(s) with an encapsulating ingredient(s). Indeed, a composition of at least one encapsulated active ingredient as defined herein includes at least one active ingredient, such as that discussed above, mixed for production or extrusion with one or more encapsulating ingredient(s) such as that discussed immediately below.

Examples of encapsulating materials/ingredients include polymers or resins, wherein the characteristics of the polymer or resin ingredient control the release profile and the protection of the active ingredient to be encapsulated. In some embodiments, the encapsulating material may be polyvinyl acetate, polyethylene, crosslinked polyvinyl pyrrolidone, polymethylmethacrylate, polylactidacid, polyhydroxyalkanoates, ethylcellulose, polyvinyl acetatephthalate, polyethylene glycol esters, methacrylicacid-co-methylmethacrylate, polyvinylacetate-viynyl alcohol copolymer or any other ingredient suitable for polymer matrix type encapsulation.

As discussed above, it may be desirable to encapsulate certain ingredients or components used in pharmaceuticals or comestibles, such as chewing gum for example. Such compositions described herein include at least one active ingredient or component to be protected and released in a certain release profile, and at least one additional encapsulating ingredient such as, but not limited to a polymer or resin for example.

It is desirable to have a uniform release of the active ingredient. Since active ingredients are typically water soluble, the material at the surface will dissolve quickly when exposed to saliva. The interior material will dissolve more slowly. Thus a component with less active at the surface will have more uniform release. In addition, uniform size distribution of component will result in more uniform release

Referring again to FIG. 1, the exemplary piece 20 of a first component includes a plurality of regions containing an active ingredient 22, such as one or more liquid or powdered sweeteners for example, disposed within an encapsulating material 24 and positioned between a center and an exterior surface 26 of the piece 20. The encapsulating material may be a polyvinyl acetate, for example having a molecular weight between 8,000 and 200,000, and more specifically between 12,000 and 100,000. In one embodiment, the plurality of regions of active ingredient 22 are water soluble, but the encapsulating material 24 is not. Within each of the plurality of pieces 20, the regions of active ingredient 22 are generally uniformly distributed throughout the encapsulating material 24. By forming the pieces 20 of a component when the material is soft and malleable, the regions of active ingredient 22 within each piece 20 remain generally whole. As a result, the regions of active ingredient 22 are completely encapsulated within the encapsulating material 24 such that a limited portion of the regions of active ingredient 22 are exposed at or generally adjacent e.g. just below the exterior surface 26 of each piece 20. In one embodiment, less than 20%, less than 15%, , less than 10%, and more specifically less than 1%, of the average active concentration within each piece 20 is exposed at or directly adjacent an exterior surface 26 of each piece 20. In addition, the portion of any region of active ingredient 22 partially extending beyond the exterior surface 26 of each piece 20 as defined by the encapsulating material 24, has a distance of less than 20% of the longest dimension of the piece 20. To determine the amount of active exposed at or directly adjacent the exterior surface 26 of each piece, a regression line is drawn for the second half of a dissolution release curve corresponding to the piece 20. The percentage of dissolved active at the point where the curve beings to deviate from the regression line is the amount of active in contact with the exterior surface of the component body.

Typically, encapsulation of an active ingredient 22 (e.g., the flavor, sweetener, etc.), will result in a delay in the release of the predominant amount of the active ingredient 22 during consumption of a comestible, such as a gum structure, that includes the encapsulated active ingredient. The initial release generally occurs in response to a release trigger, such as by rupturing the particles of encapsulated active ingredient particles due to chewing, mastication, or dissolving the encapsulated ingredients via saliva or solvents in the alimentary canal. However, in pharmaceutical applications, a chemical catalyst, such as stomach acid for example, may be configured to break down the encapsulating material 24 and expose the active ingredient 22 contained therein.

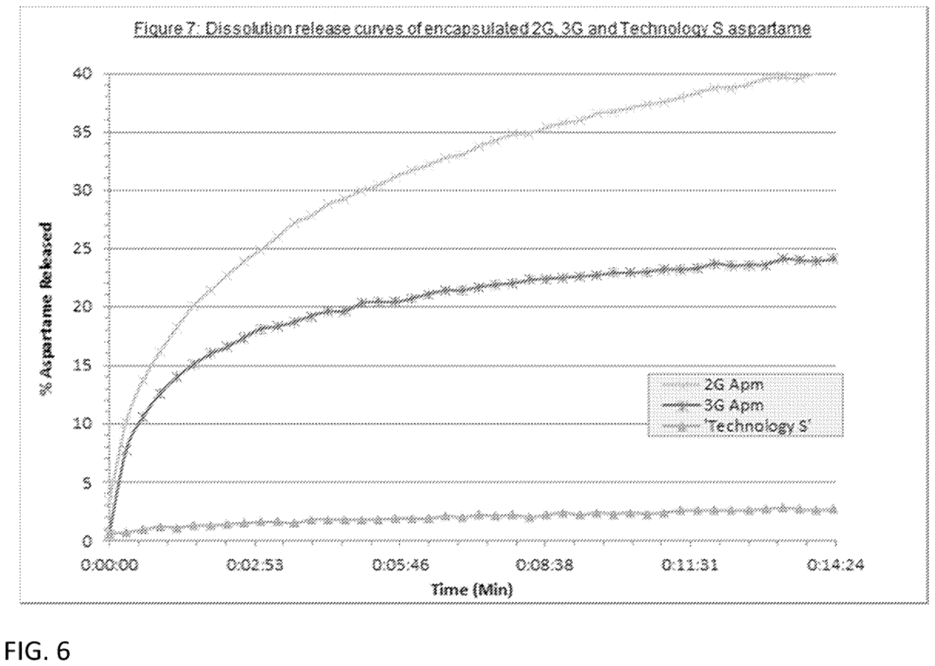

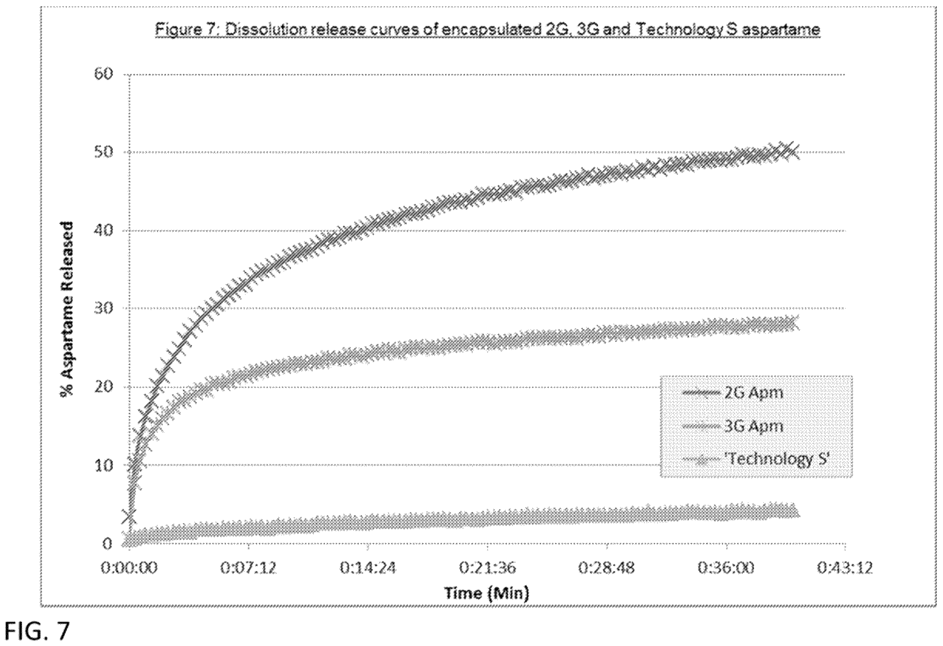

Because most of the regions of active ingredient 22 are generally not exposed at the exterior surface 26 of a piece 20, the release or dissolution of the active is significantly slower than the release of conventional encapsulated active ingredients. For example, with reference to FIGS. 6 and 7, a piece 20 as described herein with a first active ingredient, such as aspartame for example, has a dissolution of less than or equal to about 10% after 36 minutes. Conventional pieces of the same encapsulated first active ingredient, however, have a dissolution of about 30% or 50% after the same length of time. In addition, the release profile of a piece 20 as described herein may be linear or generally linear, whereas conventional pieces of the same encapsulated first active ingredient have an initially asymptotic release profile.

A typical chewing life for gum is about 30 minutes for example. During that chewing life, it is important that the active ingredient is present so that the consumer experiences the effect of the active during the entire chew. If the release rate of the active ingredient is too high, the active ingredient within the chewing gum will be consumed in less than 30 minutes. For the active ingredient to last for 30 minutes, the release rate of the active ingredient should be less than about 3% per minute. If the data related to release rate is measured at 20 second intervals, the difference between consecutive data points should be less than about 1%. The example graph illustrated in FIG. 6 shows the percentage of active ingredient release as a function of time. As shown, the slope of the curve for an encapsulated active ingredient as described herein, titled "Technology S" in the FIG. (the technology of this invention), is less than 10% per minute, and more specifically less than 5% per minute and less than 3% per minute, and reaches this rate within less than a minute of exposure. With respect to the curve titled "2G" and indicative of a conventional encapsulated active ingredient, the slope of the curve does not reach a rate of less than 3% per minute until about four minutes have elapsed. Similarly, the curve titled "3G" associated with another conventional encapsulated active ingredient achieves a dissolution rate of less than 3% per minute after about 2 minutes. In addition, the conventional technologies have initial release rates of about 7% per 20 seconds, whereas the process described herein has an initial rate of less than 1% per 20 seconds.

The dissolution rate of the encapsulated active ingredient as described herein is measured using a Distek Dissolution Machine Model 2100C. Prior to performing the test, a correction for the ultraviolet (UV) absorption of the water and an analytical wavelength associated with the active ingredient should be determined. To measure a correction for the ultraviolet (UV) absorption of the water, one of the tanks is filled with about 200mL of deionized water, one or more UV probes are inserted therein. The UV probes are configured to measure the spectrum that will be used for water UV absorption correction. The analytical wavelength is the wavelength having the greatest absorbance of the active ingredient. In embodiments where the active ingredient is aspartame, the analytical wavelength is 200 nm, in embodiments where the active ingredient is citric acid, the analytical wavelength is 210nm, and in embodiments where the active ingredient is Acesulfame-K, the analytical wavelength is 227 nm.

To measure the dissolution rate, the paddle rotational speed of the machine is set to about 350 rpm and the glass chamber of the machine is filled with approximately 500 mL of deionized water. Once the water within the chamber reaches a temperature between about 21 and 23°C, the encapsulated active ingredient is weighed and then added to the water. The content of the active ingredient within the encapsulated active ingredient added to the water should be similar to an amount of active ingredient added to 200mL of deionized water that has a linear response to the concentration level at the corresponding analytical wavelength. For example, when the active ingredient is Aspartame, the concentration level at the selected wavelength is about .275g/L, when the active ingredient is Citric Acid, the concentration level at the selected wavelength is about 7.5g/L, and when the active ingredient is Acesulfame-K, the concentration level at the selected wavelength is about .175g/L. Once the encapsulated active ingredient has been added to the water, dissolution rate data should be collected, such as about every 20 seconds for example. The data collection is continued until the first of 35 minutes or the total percentage of dissolution of the active ingredient is over 50%.

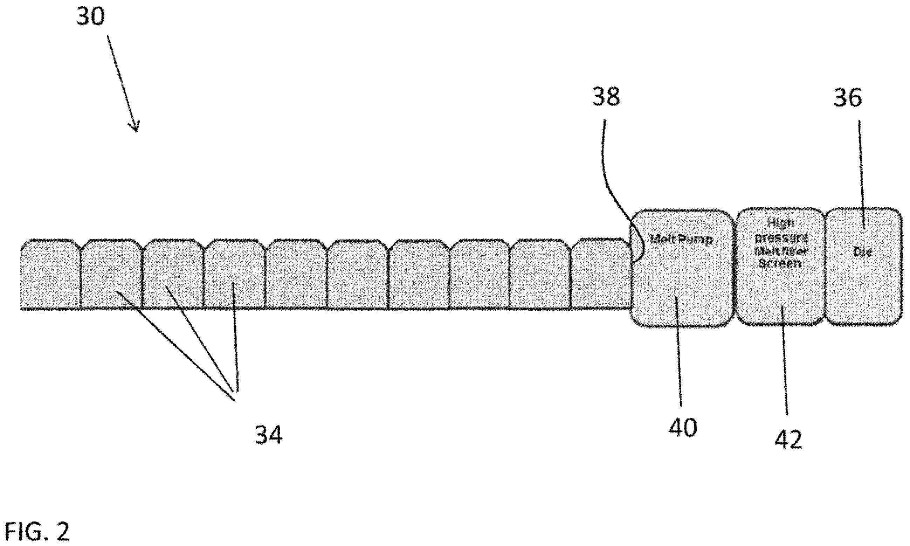

In an embodiment, the first component is formed by mixing the active ingredient 22 and the encapsulating ingredient within an extruder 30 to form an extrudate 32. A schematic diagram of an example of an extruder is illustrated in more detail in FIG. 2. In the illustrated, non-limiting embodiment, the extruder 30 is a twin screw extruder including one or more substantially hollow barrels 34 within which a first screw and second screw (not shown) are mounted. However, other types of extruders 30, such as planetary roller extruders and single screw extruders for example, can be used.

An extruder die 36 is fluidly coupled to an extrusion end 38 of the one or more barrels 34 such that a composition containing an encapsulated active ingredient dispelled therefrom has a shape complementary to the die 36. The die preferably has a plurality of small diameter exit holes, for example between 200 and 1000 microns, and these holes can be easily clogged by large particles. A melt pump or other gear pump 40 may be positioned between the extrusion end 38 and the extrusion die 36. The melt pump 40 is configured to assist in the extrusion of the encapsulate composition by receiving the unformed composition from the extrusion end 38 and providing it with a desired pressure to the extrusion die 36.

In an embodiment, a melt screen or filter 42 having a very fine mesh is positioned between the melt pump 40 and the extruder die 36. This filter 42 will typically require a high pressure to pass the polymer through the tiny openings formed therein. As the composition is forced through the small openings in the filter 42 by the high pressure generated by the melt pump 40, the particles or aggregates are broken up and dispersed. As a result, there is dramatically reduced clogging of the die and an improved polymer matrix or encapsulated composition is formed. In an embodiment, the melt screen filter 42 has openings less than or equal to about .500mm in size, such as about .200 microns in size, or about .125mm in size and the pressure of the pump 40 is between about 27.6MPa and about 34.5 MPa (about 4000 and about 5000 psi). However, other configurations of the filter 42 and pump 40 are also contemplated herein.

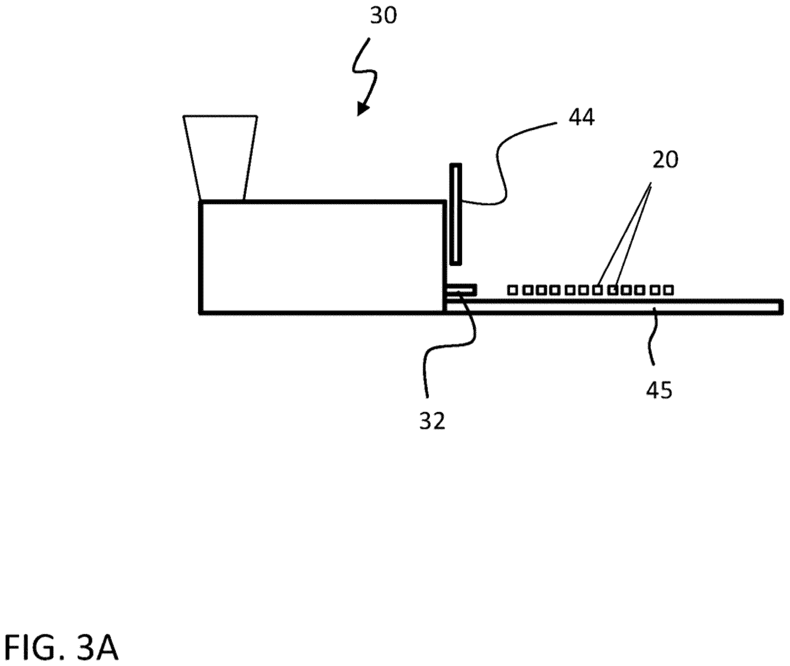

With reference now to FIG. 3A, the extrudate 32 of first component may be formed into the plurality pieces 20 as the extrudate 32 is expelled from the die 36. A cutting device 44, such as rotating set of knives on a hub for example, may be positioned generally adjacent the die outlet such that a desired length of extrudate 32 is output between each cycle of the cutting device. The composition may be cooled, such as with a high velocity air or water for example, after and/or during the formation into the plurality of pieces 20.

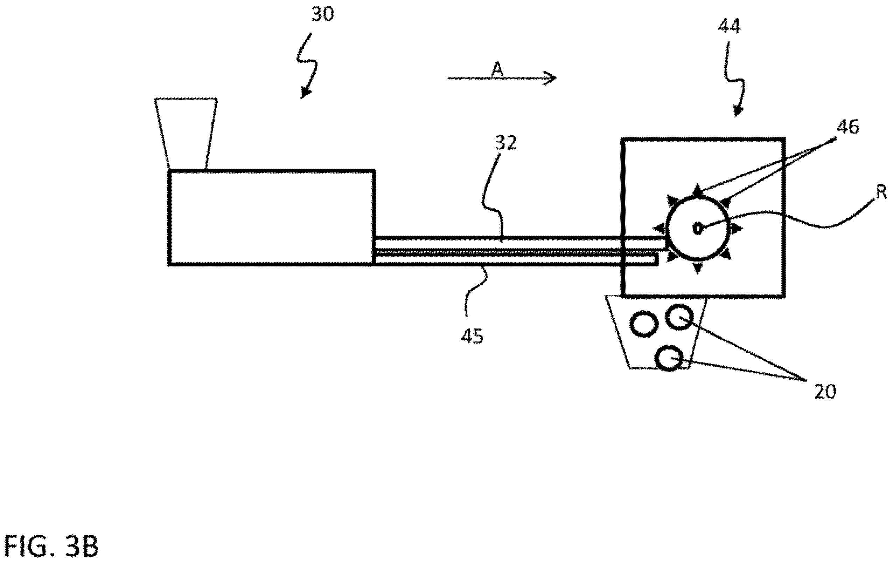

In another embodiment, shown in FIG. 3B, the first component is formed into a plurality of pieces 20 by continuously supplying extrudate 32 from the extruder 30 to a downstream cutting mechanism 44, such as via a conveyor 45. The cutting mechanism 44 may be configured to cut and/or shape the extrudate 32 continuously supplied thereto at regular intervals to form a plurality of pieces 20 substantially identical in size and shape. However, embodiments where the extrudate 32 is supplied at irregular intervals and/or where the plurality of pieces 20 are not substantially identical in size and shape are also contemplated herein. In the illustrated, non-limiting embodiment, the cutting mechanism 44 includes a rotary cutter having a plurality of blades 46 extending outwardly therefrom. The rotary cutter is configured to rotate about an axis R oriented generally perpendicular to a direction of travel of the extrudate 30. As the extrudate moves towards the cutting mechanism 44, the blades continuously cut an end portion of the extrudate 32 to form the plurality of individual pieces 20. The narrow size distribution of the plurality of pieces 20 may be achieved by maintaining the output rate from the extruder 30 and the rotational speed of the rotary cutter constant. Although a specific cutting mechanism 44 for forming pieces 20 of a first component is illustrated and described herein, other methods are within the scope of the present disclosure. In an embodiment, the cutting of the extrudate 32 into the plurality of pieces 20 is performed when the extrudate 32 is above the glass transition temperature.

In addition, the extruder 30 may be configured to output multiple ropes including a first rope configured to be formed into a plurality of first pieces and a second rope configured to be formed into a plurality of second pieces. The plurality of ropes may be provided to the same cutting mechanism 44 simultaneously, or alternatively, may be provided to different cutting mechanisms. Regardless of whether the first and second ropes of extrudate 32 are provided to the same cutting mechanism 44 or separate cutting mechanisms 44, the size and/or shape of the first pieces need not be identical or similar to the size and/or shape of the second pieces.

The release profiles of the pieces 20 vary in part based on the dimensions of the plurality of pieces 20. Accordingly, the release profile of a piece 20, and therefore the dimensions of a piece 20, may be adjusted by altering one or more parameters used during the formation of the pieces 20. For example, in embodiments where the pieces 20 are formed by cutting an extruded encapsulate composition, the release profile may be varied by adjusting one or more of the size of the die exit holes, the rate at which the composition is extruded through an extruder 30, and the rotational speed of the rotary cutter 34. In one embodiment, each of the plurality of pieces 20 has a uniform release rate for an initial period of time, such as between 5 minutes and 20 minutes for example.

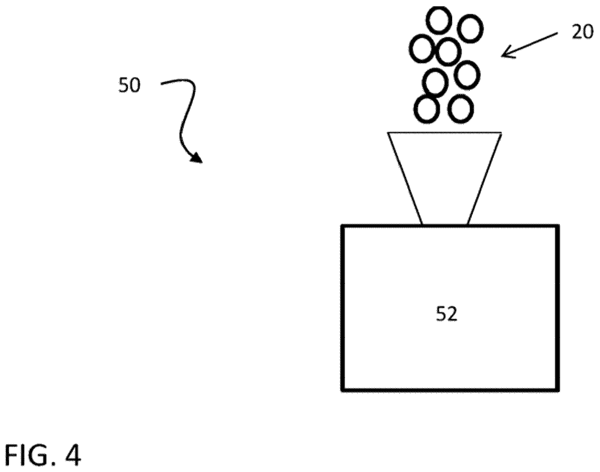

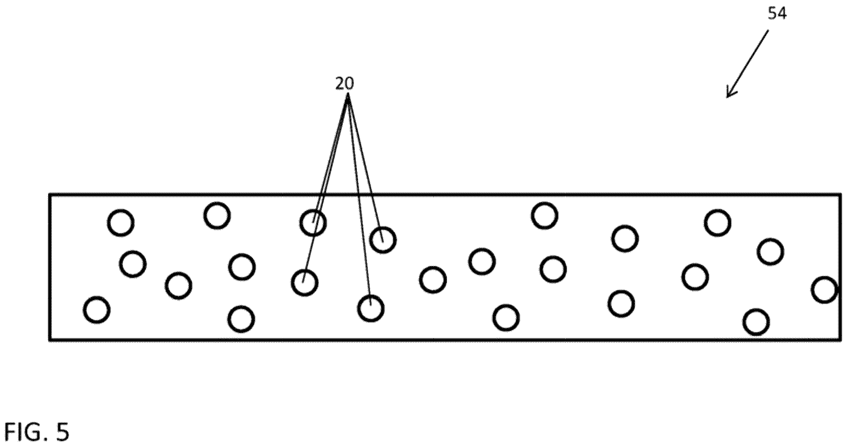

As previously suggested, the pieces 20 may be supplied to a portion of a downstream gum manufacturing system 50, such as a mixer 52 shown in FIG. 4 for example, where the pieces 20 are added as one of a plurality of ingredients used to form a gum product. In such embodiments, the individual pieces 20 are added whole and remain substantially intact in the final gum product such that the pieces 20 may be visible when viewing a cross-section of the final gum product 54, as shown in FIG. 5.

When one or more pieces 20 are used as an ingredient in a final gum product, such as gum product 44 for example, the release profile of the final gum product will depend on the release profile of the plurality of pieces 20 of encapsulated active ingredient incorporated therein. In one embodiment, the pieces 20 incorporated into a final gum product 44 have a substantially uniform release profile.

Alternatively, a mixture of pieces 20 having varying release profiles may be included in a final gum product to customize the release profile of the entire gum piece when the gum is chewed. For example, the mixture of pieces 20 may include pieces 20 varying in at least one of size, distribution, and the one or more active ingredients encapsulated therein. By including pieces 20 having varying release profiles within a gum product, the encapsulated active ingredients within the gum product 44 will be released in stages. Accordingly, the overall length of time that one or more encapsulated active ingredients are detectable by a user chewing the final gum product 44 may be extended. As a result of this improved controllability of the release profile of a piece 20, the amount of encapsulated active ingredient included in a final gum product 34 may be reduced. In addition, a reduction in the amount of encapsulated active ingredient 22 within the final gum product 44 may also result in a reduction of the amount of other ingredients added to the final gum product 44.

The pieces 20 of a first component of a comestible composition as described herein have a slowed and more uniform dissolution rate. In addition, because the size distribution of the plurality of pieces 20 is narrow, the release profile of a comestible including a plurality of pieces 20 may be controlled more accurately. By generating pieces 20 having a desired size and shape, the need for additional milling or grinding is eliminated.

The use of the terms "a" and "an" and "the" and similar referents in the context of describing the invention (especially in the context of the following claims) is to be construed to cover both the singular and the plural, unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

## Claims

1. A final chewing gum product comprising a plurality of component pieces therein, each component piece comprising:
a component body of an encapsulating material; and
a plurality of regions of at least one active ingredient encapsulated within said encapsulating material,
wherein less than 15% of an average active concentration in each component piece is in contact with an exterior surface of said component body.

2. The chewing gum component according to claim 1, wherein less than 10% of said average active concentration in said component body is in contact with the exterior surface of said component body.

3. The chewing gum component according to claim 1, wherein said component body has a longest dimension less than 1000 microns.

4. The chewing gum component according to claim 1, wherein a cross-section of said component body is generally circular in shape.

5. The chewing gum component according to claim 1, wherein said encapsulating material is insoluble in water.

## Patentansprüche

1. Fertiges Kaugummiprodukt, umfassend eine Vielzahl von Komponentenstücken darin, jedes Komponentenstück umfassend:
einen Komponentenkörper aus einem Verkapselungsmaterial; und
eine Vielzahl von Bereichen mit mindestens einem Wirkstoff, der in dem Verkapselungsmaterial verkapselt ist,
wobei weniger als 15 % einer durchschnittlichen aktiven Konzentration in jedem Komponentenstück in Kontakt mit einer Außenoberfläche des Komponentenkörpers sind.

2. Kaugummikomponente nach Anspruch 1, wobei weniger als 10 % der durchschnittlichen aktiven Konzentration in dem Komponentenkörper in Kontakt mit der Außenoberfläche des Komponentenkörpers ist.

3. Kaugummikomponente nach Anspruch 1, wobei der Komponentenkörper eine längste Abmessung von weniger als 1000 Mikrometern aufweist.

4. Kaugummikomponente nach Anspruch 1, wobei ein Querschnitt des Komponentenkörpers im Allgemeinen kreisförmig ist.

5. Kaugummikomponente nach Anspruch 1, wobei das Verkapselungsmaterial in Wasser unlöslich ist.

## Revendications

1. Produit final de chewing-gum comprenant une pluralité de morceaux de composants à l'intérieur de celui-ci, chaque morceau de composant comprenant :
un corps de composant d'un matériau d'encapsulation ; et
une pluralité de régions d'au moins un ingrédient actif encapsulé à l'intérieur dudit matériau d'encapsulation,
dans lequel moins de 15 % d'une concentration active moyenne dans chaque morceau de composant est en contact avec une surface extérieure dudit corps de composant.

2. Composant de chewing-gum selon la revendication 1, dans lequel moins de 10 % de ladite concentration active moyenne dans ledit corps de composant est en contact avec la surface extérieure dudit corps de composant.

3. Composant de chewing-gum selon la revendication 1, dans lequel ledit corps de composant présente une dimension la plus longue inférieure à 1 000 microns.

4. Composant de chewing-gum selon la revendication 1, dans lequel une section transversale dudit corps de composant est de forme généralement circulaire.

5. Composant de chewing-gum selon la revendication 1, dans lequel ledit matériau d'encapsulation est insoluble dans l'eau.
